(19) **Europäisches Patentamt European Patent Office Office européen des brevets**

(11) **EP 4 656 673 A1**

(12) **EUROPEAN PATENT APPLICATION**
published in accordance with Art. 153(4) EPC

(43) Date of publication:
03.12.2025 Bulletin 2025/49

(21) Application number: 24747327.5

(22) Date of filing: 24.01.2024

(51) International Patent Classification (IPC):
*C08J 5/04* (2006.01)     *B29C 70/16* (2006.01)
*B29C 70/32* (2006.01)     *F17C 1/06* (2006.01)

(52) Cooperative Patent Classification (CPC):
**B29C 70/16; B29C 70/32; C08J 5/04; F17C 1/06**

(86) International application number:
**PCT/JP2024/001990**

(87) International publication number:
**WO 2024/158000 (02.08.2024 Gazette 2024/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 25.01.2023 JP 2023009146

(71) Applicant: **Kuraray Co., Ltd.**
**Kurashiki-shi, Okayama 710-0801 (JP)**

(72) Inventor: **SUZUKI, Makoto**
**Tokyo 100-0004 (JP)**

(74) Representative: **Müller-Boré & Partner**
**Patentanwälte PartG mbB**
**Friedenheimer Brücke 21**
**80639 München (DE)**

(54) **FIBER-REINFORCED ETHYLENE-VINYL ALCOHOL COPOLYMER SHEET OR TAPE**

(57)    A fiber-reinforced ethylene-vinyl alcohol copolymer sheet or tape contains an ethylene-vinyl alcohol copolymer (A) and continuous fibers, wherein the continuous fibers are oriented in an MD direction to have a degree of orientation of 2 or less on average obtained by a specific equation. Thus, the fiber-reinforced ethylene-vinyl alcohol copolymer sheet or tape with excellent flexural strength and excellent hydrogen barrier properties is provided.

[FIG. 1]

EP 4 656 673 A1

**Description**

Technical Field

The present invention relates to a fiber-reinforced ethylene-vinyl alcohol copolymer sheet or tape, a molded article using the same, and a method of producing the molded article.

Background Art

Structural parts, in particular parts for automobile bodies, are expected to be made from materials with high specific strength from the perspective of improving fuel efficiency. Fiber-reinforced plastics (FRP) have specific gravities smaller than those of metal materials, such as steel plates and aluminum, but have strength comparable to those of the metal materials, and in recent years, have started to be used for automobile body parts and the like. Although thermosetting resins are generally used for the matrix of FRP, the thermosetting resins have problems, such as a long molding cycle and difficulty in post-processing including welding of molded articles and recycling and thus application of thermoplastic resins is under investigation as an alternative in these days. Among them, polyamides have high adhesiveness to carbon fibers and thus composite materials to be obtained have high strength and attract attention (Patent Literature 1).

Citation List

Patent Literature

Patent Literature 1: WO 2015/046290 A

Summary of Invention

Technical Problem

Although use of polyamides as a FRP matrix attracts attention as described above, such a polyamide has to be used together with another member with higher gas barrier properties at the same time for applications requiring gas barrier properties, particularly hydrogen barrier properties. In addition, FRPs with a matrix of such a polyamide sometimes have insufficient flexural strength. However, barrier materials using resins other than polyamides as the matrix of FRP has been scarcely investigated and no resins suitable for the FRP matrix have been known.

The present invention has been made in view of such circumstances, and it is an object thereof to provide a fiber-reinforced ethylene-vinyl alcohol copolymer sheet or tape with excellent flexural strength and excellent hydrogen barrier properties.

Solution to Problem

As a result of intensive investigation, the present inventor has found that a fiber-reinforced EVOH sheet or tape containing a specific ethylene-vinyl alcohol copolymer (hereinafter, may be abbreviated as an "EVOH") and continuous fibers, the continuous fibers satisfying a specific degree of orientation, is capable of solving the above problems and he has carried out further investigation based on these findings and thus completed the present invention.

That is, the present invention is achieved by providing:

[1] A fiber-reinforced ethylene-vinyl alcohol copolymer sheet or tape (hereinafter, may be abbreviated as a "fiber-reinforced EVOH sheet or tape"), comprising an ethylene-vinyl alcohol copolymer (A) (hereinafter, may be abbreviated as an "EVOH (A)") and continuous fibers, wherein

the continuous fibers are oriented in an MD direction to have a degree of orientation of 2 or less on average obtained by the following equation (1):

$$\text{Degree of Orientation} = (F)/(S) \quad (1)$$

(In the equation (1), in a square region obtained by cutting the fiber-reinforced EVOH sheet or tape to 2 mm in a TD direction and 2 mm in the MD direction, given that an intersection point (p) denotes an arbitrary intersection point of one of two sides in the TD direction with one of the continuous fibers and an intersection point (q) denotes an arbitrary intersection point of the other side in the TD direction with one of the continuous fibers that is reachable only along the continuous fibers from (p), (F) is a path length of a shortest path among paths to reach (q) only along the continuous fibers from (p) and (S) is a linear distance between (p) and (q). It should be noted that, as long as the continuous fibers cross each other when the square region is observed from a thickness direction in the fiber-reinforced EVOH sheet or tape, these continuous fibers are considered to constitute a continuous path even in the case that the continuous fibers are actually separated from each other in the thickness direction and do not contact each other.);

[2] The fiber-reinforced EVOH sheet or tape according to [1] above, wherein the continuous fibers are at least one selected from the group consisting of carbon fibers, glass fibers, aramid fibers, wholly aromatic polyester fibers, ceramic fibers, and metal fibers;

[3] The fiber-reinforced EVOH sheet or tape according to [1] or [2] above, wherein the EVOH (A) has an ethylene unit content of 15 mol% or more and 50 mol% or less;

[4] The fiber-reinforced EVOH sheet or tape according to any one of [1] through [3] above, wherein the sheet or tape has a content of the EVOH (A) of 20 mass% or more and 80 mass% or less and a content of the continuous fibers of 20 mass% or more and 80 mass% or less;

[5] The fiber-reinforced EVOH sheet or tape according to any one of [1] through [4] above, further comprising acid modified polyolefin (B);

[6] A molded article, comprising the fiber-reinforced EVOH sheet or tape according to any one of [1] through [5] above;

[7] The molded article according to [6] above, wherein the molded article is a pressure vessel;

[8] The molded article according to [7] above, wherein the molded article is a hydrogen tank;

[9] A method of producing the molded article according to [8] above, comprising:
winding or laminating the fiber-reinforced EVOH sheet or tape on a mandrel by winding molding or braiding molding;

[10] The production method according to [9] above, comprising:
winding or laminating a fiber-reinforced thermoplastic resin sheet or tape different from the ethylene-vinyl alcohol copolymer outside the molded article containing the fiber-reinforced ethylene-vinyl alcohol copolymer sheet or tape;

[11] A fiber-reinforced EVOH plate, comprising the fiber-reinforced EVOH sheet or tape according to any one of [1] through [5] above;

[12] A molded article, comprising the fiber-reinforced EVOH plate according to [11] above;

[13] The molded article according to [12] above, wherein the molded article is a hydrogen tank;

[14] A molded article, comprising: the fiber-reinforced EVOH sheet or tape according to any one of [1] through [5] above; and a fiber-reinforced sheet or tape containing a resin reactive to the EVOH; and

[15] The molded article according to [14] above, wherein the resin reactive to the EVOH is a polyamide-based resin.

Advantageous Effects of Invention

The present invention can provide the fiber-reinforced EVOH sheet or tape with excellent flexural strength and excellent hydrogen barrier properties.

Brief Description of Drawings

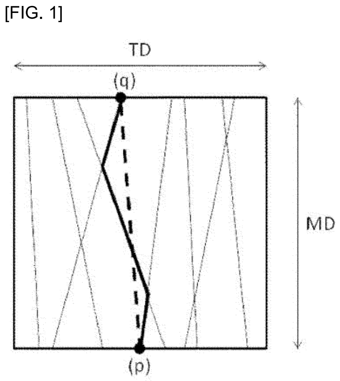

Fig. 1 is a schematic diagram of a square region obtained by cutting a fiber-reinforced EVOH sheet or tape to 2 mm in a TD direction and 2 mm in an MD direction observed from a thickness direction in the fiber-reinforced EVOH sheet or tape.

Description of Embodiments

The fiber-reinforced EVOH sheet or tape of the present invention comprises an EVOH (A) and continuous fibers, wherein the continuous fibers are oriented in an MD direction to have a degree of orientation of 2 or less on average obtained by the following equation (1):

$$\text{Degree of Orientation} = (F)/(S) \quad (1)$$

(In the equation (1), (F) and (S) are as defined above.)

In this specification, a "sheet" refers to those with a width (in the TD direction) of 250 mm or more and a "tape" refers to those with a width of less than 250 mm. In this specification, "continuous fibers" refer to continuous fibers not being cut substantially, and for example, refer to fibers with an aspect ratio (ratio of an axial fiber length to a fiber diameter) of 100 or more, fibers with a length of 10 mm or more, and the like. It should be noted that, even if the fiber-reinforced EVOH sheet or tape of the present invention is cut and the continuous fibers inside have an aspect ratio of less than 100 or a length of less than 10 mm, the continuous fibers are considered to those not being cut substantially in the fiber-reinforced EVOH sheet or tape, that is, the fiber-reinforced EVOH sheet or tape is considered to contain the "continuous fibers". The fiber-reinforced EVOH sheet or tape of the present invention preferably has a thickness of 5 mm or less, more preferably 1 mm or less, even more preferably 0.5 mm or less, and particularly preferably 0.3 mm or less. In addition, the thickness may be, for example, 0.05 mm or more. The thickness of 5 mm or less is less likely to cause unevenness in the thickness for production of the molded articles of the present invention. In addition, the thickness of 0.05 $\mu$m or more facilitates efficient production of the molded articles of the present invention.

How to obtain the degree of orientation herein is described with reference to Fig. 1. Fig. 1 is a schematic diagram of a square region obtained by cutting a fiber-reinforced EVOH sheet or tape to 2 mm in a TD direction and 2 mm in an MD direction observed from a thickness direction in the fiber-reinforced EVOH sheet or tape. The point (p) is an arbitrary intersection point of one of two sides in the TD direction with one of the continuous fibers in the square region. The point (q) is an arbitrary intersection point of the other side in the TD direction with one of the continuous fibers that is reachable only along over the continuous fibers from (p). In the equation (1), (F) is the path length of the shortest path among paths to reach (q) only along over the continuous fibers from (p) and is the length of a thick solid line in Fig. 1. In addition, (S) is the linear distance between (p) and (q) and is the length of a dashed line in Fig. 1. It should be noted that, as long as the continuous fibers cross each other when the square region is observed from the thickness direction in the fiber-reinforced EVOH sheet or tape, these continuous fibers are considered to constitute a continuous path even in the case that the continuous fibers are actually separated from each other in the thickness direction and do not contact each other. In the fiber-reinforced EVOH sheet or tape of the present invention, the degrees of orientation ((F)/(S)) are obtained for all conceivable combinations of (p) and (q) and the continuous fibers are oriented in the MD direction to have the degrees of orientation of 2 or less on average (number average), preferably 1.8 or less, more preferably 1.6 or less, and even more preferably 1.5 or less. The degree of orientation may be 1.0 or more, 1.1 or more, or 1.2 or more. The average degree of orientation can be obtained by thinning the continuous fibers in an image obtained with a three-dimensional X ray CT scanner using three-dimensional volume rendering software and calculating degrees of orientation ((F)/(S)) for all (p) and (q) to obtain a number average of the degrees. The fiber-reinforced EVOH sheet or tape of the present invention satisfying the above degree of orientation tends to have excellent flexural strength.

EVOH (A)

The fiber-reinforced EVOH sheet or tape of the present invention contains the EVOH (A). The fiber-reinforced EVOH sheet or tape of the present invention containing the EVOH (A) causes not only improvement in oxygen barrier properties and hydrogen barrier properties but also the sheet or tape containing the continuous fibers with a degree of orientation of 2 or less on average and the EVOH (A) tends to have excellent flexural strength. It should be noted that the flexural strength of the sheet or tape tends to be more excellent in the MD direction and thus, for example, lamination while rotating the sheet or tape at each 90° or lamination in various directions allows exhibition of greater flexural strength.

The EVOH (A) can be generally obtained by saponifying an ethylene-vinyl ester copolymer. The production and saponification of such an ethylene-vinyl ester copolymer may be performed by known methods. A representative example of the vinyl ester is vinyl acetate while examples of the vinyl ester include other fatty acid vinyl esters, such as vinyl formate, vinyl propionate, vinyl valerate, vinyl caprate, vinyl laurate, vinyl stearate, vinyl pivalate, and vinyl versatate.

The EVOH (A) preferably has an ethylene unit content of 15 mol% or more, more preferably 20 mol% or more, and even more preferably 24 mol% or more. In addition, the EVOH (A) preferably has an ethylene unit content of 50 mol% or less, more preferably 35 mol% or less, even more preferably 32 mol% or less, and particularly preferably 30 mol% or less. Use of the EVOH (A) with a relatively low ethylene unit content allows exhibition of particularly excellent hydrogen barrier properties and flexural strength. Although the EVOH (A) with a relatively low ethylene unit content generally has increased rigidity and tends to cause cracks by heating and deformation, the present invention exhibits a distinct effect of increasing the flexural strength rather by containing the EVOH (A) with a relatively low ethylene unit content in combination with the continuous fibers having the specific degree of orientation. In addition, since naturally allowing suppression of cracks, the combination with the continuous fibers can solve the problems (development of cracks due to increased rigidity, etc.) particularly notably occurring when using the EVOH (A) with a relatively low ethylene unit content. The ethylene unit content of the EVOH (A) can be obtained by nuclear magnetic resonance (NMR).

The vinyl ester component in the EVOH (A) preferably has a degree of saponification of 80 mol% or more, more preferably 90 mol% or more, and even more preferably 99 mol% or more. The degree of saponification of 90 mol% or more allows an increase in gas barrier properties and the like. The EVOH (A) may have a degree of saponification of 100 mol% or less or 99.99 mol% or less. The degree of saponification of the EVOH (A) can be calculated by $^1$H-NMR measurement, followed by measurement of the peak area of the hydrogen atoms contained in the vinyl ester structure and the peak area of the hydrogen atoms contained in the vinyl alcohol structure. The EVOH (A) having a degree of saponification within the above range tends to have good gas barrier properties.

The EVOH (A) may contain additional monomer units other than ethylene, vinyl esters, and vinyl alcohols as long as the effects of the present invention are not impaired. In particular, introduction of a modifying group containing a primary hydroxyl group with a specific structure sometimes allows the EVOH (A) to obtain both gas barrier properties and molding processability at high levels. The content of the additional monomer units is preferably 10 mol% or less, more preferably 5 mol% or less, even more preferably 1 mol% or less, and particularly preferably substantially not contained. Examples of such an additional monomer include: alkenes, such as propylene, butylene, pentene, and hexene; ester group-containing alkenes, such as 3-acyloxy-1-propene, 3-acyloxy-1-butene, 4-acyloxy-1-butene, 3,4-diacyloxy-1-butene, 3-acyloxy-4-methyl-1-butene, 4-acyloxy-1-butene, 3,4-diacyloxy-1-butene, 3-acyloxy-4-methyl-1-butene, 4-acyloxy-2-methyl-1-butene, 4-acyloxy-3-methyl-1-butene, 3,4-diacyloxy-2-methyl-1-butene, 4-acyloxy-1-pentene, 5-acyloxy-1-pentene, 4,5-diacyloxy-1-pentene, 4-acyloxy-1-hexene, 5-acyloxy-1-hexene, 6-acyloxy-1-hexene, 5,6-diacyloxy-1-hexene, and 1,3-diacetoxy-2-methylenepropane, and saponification products thereof; unsaturated acids, such as acrylic acid, methacrylic acid, crotonic acid, and itaconic acid, and anhydrides, salts, mono- and di-alkyl esters, and the like thereof; nitriles, such as acrylonitrile and methacrylonitrile; amides, such as acrylamide and methacrylamide; olefin sulfonic acids, such as vinylsulfonic acid, allylsulfonic acid, and methallylsulfonic acid, and salts thereof; vinyl silane compounds, such as vinyltrimethoxysilane, vinyltriethoxysilane, vinyltri($\beta$-methoxy-ethoxy)silane, and $\gamma$-methacryloxypropylmethoxysilane; alkyl vinyl ethers; vinyl ketones; N-vinylpyrrolidone; vinyl chloride; vinylidene chloride; and the like.

The EVOH (A) may be modified by urethanization, acetalization, cyanoethylation, oxyalkylenation, and the like as needed. The oxyalkylenation may be carried out using epoxy compounds, and examples of them include: epoxyethane(ethylene oxide); epoxypropane; 1,2-epoxybutane; 2,3-epoxybutane; 3-methyl-1,2-epoxybutane; 1,2-epoxypentane; 3-methyl-1,2-epoxypentane; 1,2-epoxyhexane; 2,3-epoxyhexane; 3,4-epoxyhexane; 3-methyl-1,2-epoxyhexane; 3-methyl-1,2-epoxyheptane; 4-methyl-1,2-epoxyheptane; 1,2-epoxyoctane; 2,3-epoxyoctane; 1,2-epoxynonane; 2,3-epoxynonane; 1,2-epoxydecane; 1,2-epoxydodecane; epoxyethylbenzene; 1-phenyl-1,2-propane; 3-phenyl-1,2-epoxypropane; various alkyl glycidyl ethers; various alkylene glycol monoglycidyl ethers; various alkenyl glycidyl ethers; various epoxy alkanols, such as glycidol; various epoxycycloalkanes; various epoxycycloalkenes; and the like. Among them, 1,2-epoxybutane, 2,3-epoxybutane, epoxypropane, epoxyethane, and glycidol are preferred, and epoxypropane and glycidol are more preferred.

As the EVOH (A), a single kind of such an EVOH may be used or two or more kinds of EVOHs with different ethylene unit contents, degrees of saponification, copolymer components, modification or unmodification or types of modification, or the like may be used by mixing.

The EVOH (A) preferably has an MFR measured at 210°C under a load of 2160 g of 0.1 g/10 min or more, more preferably 0.5 g/10 min or more, and even more preferably 1 g/10 min or more. Meanwhile, the EVOH (A) preferably has an MFR of 50 g/10 min or less, more preferably 20 g/10 min or less, and even more preferably 10 g/10 min or less. The EVOH (A) with an MFR within the above range causes improvement in melt kneadability and melt moldability of a resin composition to be obtained.

Continuous Fiber

The fiber-reinforced EVOH sheet or tape of the present invention contains the continuous fibers. The fiber-reinforced EVOH sheet or tape of the present invention containing the continuous fibers tends to notably improve in flexural strength.

Examples of the continuous fibers include: inorganic fibers, such as carbon fibers, glass fibers, silicon carbide fibers, alumina fibers, ceramic fibers, basalt fibers, and metal (e.g., gold, silver, copper, iron, nickel, titanium, stainless steel, etc.) fibers; organic fibers, such as wholly aromatic polyester fibers, polyphenylene sulfide fibers, aramid fibers, polysulfone amide fibers, phenolic resin fibers, polyimide fibers, and fluorine-doped fibers; and the like. Any one kind of them may be used singly or two or more kinds may be used in combination. Among them, from the perspective of physical properties and availability, the continuous fibers are preferably at least one selected from the group consisting of carbon fibers, glass fibers, aramid fibers, wholly aromatic polyester fibers, ceramic fibers, and metal fibers, and are more preferably carbon fibers. The continuous fibers may be subjected to application of a surface modifier, such as a coupling agent, and a sizing agent.

The continuous fibers preferably have a number-average fiber diameter from 1 to 100 $\mu$m, more preferably from 3 to 50 $\mu$m, and even more preferably from 5 to 10 $\mu$m. Examples of the continuous fibers to be used include those with the number of filaments approximately from 500 to 30000 in accordance with the purpose.

From the perspective of strength, the fiber-reinforced EVOH sheet or tape of the present invention preferably contains from 20 to 80 mass%, more preferably from 30 to 70 mass%, of the continuous fibers. The content of 20 mass% or more allows the continuous fibers to secure sufficient strength, and the content of 80 mass% or less allows the continuous fibers to be sufficiently impregnated with the EVOH.

Acid Modified Polyolefin (B)

The fiber-reinforced EVOH sheet or tape of the present invention may contain acid modified polyolefin (B). The fiber-reinforced EVOH sheet or tape of the present invention containing the acid modified polyolefin (B) causes improvement in flexibility at low temperatures. Examples of the acid modified polyolefin (B) include acid modified products of copolymers, such as polyethylene, polypropylene, ethylene-propylene copolymers, ethylene-1-butene copolymers, ethylene-1-hexene copolymers, ethylene-4-methyl-1-pentene copolymers, ethylene-1-octene copolymers, ethylene-1-butene-1-hexene copolymers, ethylene-1-butene-4-methyl-1-pentene copolymers, and ethylene-1-butene-1-octene copolymers. Among them, from the perspective of crack resistance of the multilayer structure to be obtained, the acid modified polyolefin (B) is preferably at least one selected from the group consisting of acid modified ethylene-1-butene copolymers and acid modified ethylene-propylene copolymers, and more preferably acid modified ethylene-1-butene copolymers.

Examples of an acid modifying group include: unsaturated carboxylic acids and anhydrides thereof, such as maleic acid, acrylic acid, itaconic acid, crotonic acid, maleic anhydrides, and itaconic anhydrides, and from the perspective of reactivity to the EVOH (A), maleic anhydride modification is preferable.

The fiber-reinforced EVOH sheet or tape of the present invention containing the acid modified polyolefin (B) preferably has a mass ratio (B/A) of the acid modified polyolefin (B) to the EVOH (A) of 1/99 or more, more preferably 3/97 or more, and even more preferably 5/95 or more. In addition, the mass ratio (B/A) is preferably 50/50 or less, more preferably 40/60 or less, and even more preferably 30/70 or less. The mass ratio (B/A) within the above range tends to allow providing flexibility while maintaining gas barrier properties.

Additional Components

The fiber-reinforced EVOH sheet or tape of the present invention may contain additional components (components other than the EVOH (A), the continuous fibers, and the acid modified polyolefin (B)) as long as the effects of the present invention are not impaired and examples of the additional components include: resins other than the EVOH (A), the continuous fibers, and the acid modified polyolefin (B); carboxylic acid compounds; phosphoric acid compounds; boron compounds; metal salts; thermal stabilizers; antioxidants; ultraviolet absorbers; plasticizers; antistatic agents; lubricants; colorants; fillers; desiccants; inorganic materials other than the continuous fibers; nucleating agents; crystallization retardants; hydrolysis inhibitors; radical inhibitors; delustering agents; ultraviolet absorbers; flame retardants; reinforcing agents, such as various fibers other than the continuous fibers; and the like.

Examples of the resins other than the EVOH (A) and the acid modified polyolefin (B) include: unmodified polyolefins, such as unmodified polyethylene, unmodified polypropylene, and unmodified ethylene-a olefin copolymers; polyamides; polyvinyl chloride; polyvinylidene chloride; polyester; polystyrene; epoxy resins; acrylic resins; urethane resins; polyester resins; and the like. Among them, from the perspective of excellent compatibility with the acid modified polyolefin (B), unmodified polyolefins are preferred and unmodified ethylene-a olefin copolymers are more preferred. From the perspective of not impairing the effects of the present invention, the fiber-reinforced EVOH sheet or tape of the present invention containing such a resin other than the EVOH (A) and the acid modified polyolefin (B) preferably has a content of 5 mass% or less, more preferably 3 mass% or less, even more preferably 1 mass% or less, and particularly preferably 0.1 mass% or less. The fiber-reinforced EVOH sheet or tape of the present invention may contain no resins other than the EVOH (A) and the acid modified polyolefin (B).

The fiber-reinforced EVOH sheet or tape of the present invention containing such a carboxylic acid compound tends to allow inhibition of coloration during melt molding. The carboxylic acid compound may be any of monocarboxylic acids or polycarboxylic acids, or may be a combination of them. The carboxylic acid compound may be in the form of ions, and such a carboxylic acid ion may form a salt with a metal ion.

The fiber-reinforced EVOH sheet or tape of the present invention containing such a phosphoric acid compound tends to allow inhibition of coloration during melt molding. Examples of the phosphoric acid compound to be used include, but not particularly limited to: various acids, such as phosphoric acid and phosphorous acid, and salts thereof; and the like. Such a phosphate may be contained in any form of monobasic phosphate, dibasic phosphate, or tribasic phosphate, and monobasic phosphate is preferred. The cationic species of the phosphate are preferably, but not particularly limited to, alkali metal salts. Among them, sodium dihydrogen phosphate and potassium dihydrogen phosphate are preferred. The fiber-reinforced EVOH sheet or tape of the present invention containing the phosphoric acid compound preferably has a content of the phosphoric acid compound of 5 ppm or more and 200 ppm or less in terms of phosphate radicals. The phosphoric acid compound content of 5 ppm or more tends to provide good coloration resistance during melt molding. Meanwhile, the phosphoric acid compound content of 200 ppm or less tends to provide good melt moldability, and is more preferably 160 ppm or less.

The fiber-reinforced EVOH sheet or tape of the present invention containing such a boron compound tends to allow inhibition of torque fluctuations during heating and melting. Examples of the boron compound include, but not particularly limited to, boric acids, borate esters, borates, boron hydrides, and the like. Specific examples include: boric acids, such as orthoboric acid, metaboric acid, and tetraboric acid; borate esters, such as triethyl borate and trimethyl borate; borates, such as alkali metal salts, alkaline earth metal salts, and borax, of the above boric acids; and the like. Among them, orthoboric acid (hereinafter, may be simply referred to as a boric acid) is preferred. The fiber-reinforced EVOH sheet or tape of the present invention containing the boron compound preferably has a content of the boron compound of 20 ppm or more and 2000 ppm or less in terms of boron elements. The boron compound content of 20 ppm or more tends to allow inhibition of torque fluctuations during heating and melting, and is more preferably 50 ppm or more. Meanwhile, the boron compound content of 2000 ppm or less tends to allow good maintenance of moldability, and is more preferably 1000 ppm or less.

The fiber-reinforced EVOH sheet or tape of the present invention containing such an alkali metal salt tends to provide good interlayer adhesion with another resin layer. The cationic species of the alkali metal salt are preferably, but not particularly limited to, any of sodium salts or potassium salts. The anionic species of the alkali metal salt are not particularly limited, either. The alkali metal salt may be added in the form of carboxylate, carbonate, hydrogencarbonate, phosphate, hydrogenphosphate, borate, hydroxide, and the like. The fiber-reinforced EVOH sheet or tape of the present invention containing the alkali metal salt preferably has a content of the alkali metal salt of 10 ppm or more and 500 ppm or less in terms of metal elements. The alkali metal salt content of 10 ppm or more tends to provide good interlayer adhesion, and is more preferably 50 ppm or more. Meanwhile, the alkali metal salt content of 500 ppm or less tends to provide excellent melt stability, and is more preferably 300 ppm or less.

The fiber-reinforced EVOH sheet or tape of the present invention containing such an alkaline earth metal salt tends to allow inhibition of degradation while molded articles are repeatedly melt molded and inhibition of generating degraded products, such as gel. The cationic species of the alkaline earth metal salt are preferably, but not particularly limited to, magnesium salts or calcium salts. The anionic species of the alkaline earth metal salt are not particularly limited, either. The alkaline earth metal salt may be added in the form of carboxylate, carbonate, hydrogencarbonate, phosphate, hydrogen phosphate, borate, hydroxide, and the like.

The fiber-reinforced EVOH sheet or tape of the present invention preferably contains such a thermal stabilizer. Examples of the thermal stabilizer include phenol-based thermal stabilizers, phosphoric thermal stabilizers, sulfuric thermal stabilizers, amine-based thermal stabilizers, copper-based thermal stabilizers, derivatives thereof, and the like.

Examples of such a phenol-based thermal stabilizer include 2,2-thio-diethylenebis[3-(3,5-di-t-butyl-4-hydroxyphenyl)propionate], N,N'-hexamethylene bis[3-(3,5-di-t-butyl-4-hydroxyphenyl)propionamide], triethyleneglycol bis(3-t-butyl-4-hydroxy-5-methylphenyl)propionate, hexamethylene bis(3-(3,5-di-t-butyl-4-hydroxyphenyl)propionate), 3,9-bis [1,1-dimethyl-2-[β{(3-t-butyl-4-hydroxy-5-methylphenyl)propionyloxy}ethyl]-2,4,8,10-tetraoxaspiro[5.5]undecane, tris(3,5-di-t-butyl-4-hydroxybenzil)isocyanurate, 1,3,5-trimethyl-2,4,6-tris(3,5-di-t-butyl-4-hydroxybenzil)benzene, and the like.

Examples of such a phosphoric thermal stabilizer include monosodium phosphate, disodium phosphate, trisodium phosphate, sodium phosphite, calcium phosphite, magnesium phosphite, manganese phosphite, triphenyl phosphite, trioctadecyl phosphite, tridecyl phosphite, trinonylphenyl phosphite, diphenylisodecyl phosphite, tetrakis(2,4-di-t-butylphenyl)-4,4'-biphenylene diphosphonite), tetrakis(2,4-di-t-butyl-5-methylphenyl)-4,4'-biphenylene diphosphonite), bis(2,4-dicumylphenyl)pentaerythritol diphosphite, bis(2,6-di-t-butyl-4-methylphenyl)pentaerythritol diphosphite, tris(2,4-di-t-butylphenyl)phosphite, 6-[3-(3-tert-butyl-4-hydroxy-5-methylphenyl)propoxy]-2,4,8,10-tetra-t-butyldibenzo [d,f][1,3,2]-dioxaphosphepin, and the like.

Examples of such a sulfuric thermal stabilizer include distearyl 3,3'-thiodipropionate, pentaerythrityl tetrakis(3-lauryl thiopropionate), 2-mercaptobenzimidazole, didodecyl 3,3'-thiodipropionate, ditridecyl 3,4'-thiodipropionate, 2,2-bis [[3-(dodecylthio)-1-oxopropoxy]methyl]-1,3-propanediyl ester, and the like.

Examples of such an amine-based thermal stabilizer include 4,4'-bis(a,a-dimethylbenzil)diphenylamine ("Nocrac CD" produced by Ouchi Shinko Chemical Industrial Co., Ltd., etc.), N,N'-di-2-naphthyl-p-phenylenediamine ("Nocrac White" produced by Ouchi Shinko Chemical Industrial Co., Ltd., etc.), N,N'-diphenyl-p-phenylenediamine ("Nocrac DP" produced by Ouchi Shinko Chemical Industrial Co., Ltd., etc.), N-phenyl-1-naphthylamine ("Nocrac PA" produced by Ouchi Shinko Chemical Industrial Co., Ltd., etc.), N-phenyl-N'-isopropyl-p-phenylenediamine ("Nocrac 810-NA" produced by Ouchi Shinko Chemical Industrial Co., Ltd., etc.), N-phenyl-N'-(1,3-dimethylbutyl)-p-phenylenediamine ("Nocrac 6C" produced by Ouchi Shinko Chemical Industrial Co., Ltd., etc.), N-phenyl-N'-(3-methacryloyloxy-2-hydroxypropyl)-p-phenylenediamine ("Nocrac G-1" produced by Ouchi Shinko Chemical Industrial Co., Ltd., etc.), and the like.

Examples of such a copper-based thermal stabilizer include: copper halides and derivatives thereof, such as copper iodide; and the like.

In particular, the fiber-reinforced EVOH sheet or tape of the present invention preferably contains at least one of the phenol-based thermal stabilizer, phosphoric thermal stabilizer, or amine-based thermal stabilizer described above, and more preferably contains the phenol-based thermal stabilizer.

The fiber-reinforced EVOH sheet or tape of the present invention containing such an antioxidant causes inhibition of degradation and a more increase in gas barrier properties, crack resistance, and the like of the fiber-reinforced EVOH sheet or tape of the present invention. Examples of the antioxidant to be used include compounds with a hindered phenol group, compounds with a hindered amine group, and other known antioxidants. Specific examples of the antioxidant include 2,5-di-t-butyl-hydroquinone, 2,6-dit-butyl-p-cresol, 4,4'-thiobis-(6-t-butylphenol), 2,2'-methylene-bis-(4-methyl-6-t-butylphenol), octadecyl-3-(3',5'-di-t-butyl-4'-hydroxyphenyl)propionate, 4,4'-thiobis-(6-t-butylphenol), pentaerythritol tetrakis[3-(3,5-di-tert-butyl-4-hydroxyphenyl)propionate], N,N'-hexane-1,6-diyl bis[3-(3,5-di-tert-butyl-4-hydroxyphenyl)propionamide], and the like. In addition, the antioxidants described in paragraphs [0029] and [0033] through [0035] of JP 2015-27813 A may also be preferably used. The fiber-reinforced EVOH sheet or tape of the present invention has a content of the antioxidant of, for example, preferably 0.001 mass% or more and 4 mass% or less, more preferably 0.01 mass% or more and 2 mass% or less, and even more preferably 0.1 mass% or more and 1 mass% or less.

Examples of such an ultraviolet absorber include ethylene-2-cyano-3',3'-diphenyl acrylate, 2-(2'-hydroxy-5'-methylphenyl)benzotriazole, 2-(2'-hydroxy-3'-t-butyl-5'-methylphenyl)5-chlorobenzotriazole, 2-hydroxy-4-methoxybenzophenone, 2,2'-dihydroxy-4-methoxybenzophenone, and the like.

Examples of such a plasticizer include dimethyl phthalate, diethyl phthalate, dioctyl phthalate, wax, liquid paraffin, phosphate ester, and the like. Examples of such an antistatic agent include pentaerythrite monostearate, sorbitan monopalmitate, sulfated polyolefins, polyethylene oxide, Carbowax, and the like. Examples of such a lubricant include ethylenebisstearamide, butyl stearate, and the like. Examples of such a colorant include carbon black, phthalocyanine, quinacridone, indoline, azo pigments, red iron oxide, and the like. Examples of such a filler include glass fibers, asbestos, ballastonite, calcium silicate, and the like. Examples of such an inorganic material include carbon nanotubes, fullerene, talc, wollastonite, zeolite, sericite, mica, kaolin, clay, pyrophyllite, silica, bentonite, alumina silicate, silicon oxide, magnesium oxide, alumina, zirconium oxide, titanium oxide, iron oxide, calcium carbonate, magnesium carbonate, dolomite, calcium sulfate, barium sulfate, calcium hydroxide, magnesium hydroxide, aluminum hydroxide, glass beads, glass flakes, glass powder, ceramic beads, boron nitride, silicon carbide, carbon black, graphite, and the like. It should be noted that all the compounds in the form of fibers as the examples of the filler and the inorganic material are discontinuous fibers.

In the fiber-reinforced EVOH sheet or tape of the present invention, the ratio of the EVOH (A) in the resin components of the components other than the continuous fibers is preferably 70 mass% or more, more preferably 80 mass% or more, even more preferably 90 mass% or more, and may be 95 mass% or more, 98 mass% or more, 99 mass% or more or 100 mass%. In the fiber-reinforced EVOH sheet or tape of the present invention containing the acid modified polyolefin (B), the ratio of the total of the EVOH (A) and the acid modified polyolefin (B) in the resin components of the components other than the continuous fibers is preferably 70 mass% or more, more preferably 80 mass% or more, even more preferably 90 mass% or more, and may be 95 mass% or more, 98 mass% or more, 99 mass% or more, or 100 mass%.

The ratio of the EVOH (A) and the continuous fibers in the fiber-reinforced EVOH sheet or tape of the present invention is preferably 70 mass% or more, more preferably 80 mass% or more, even more preferably 90 mass% or more, and may be 95 mass% or more, 98 mass% or more, 99 mass% or more, or 100 mass%. In the fiber-reinforced EVOH sheet or tape of the present invention containing the acid modified polyolefin (B), the ratio of the EVOH (A), the acid modified polyolefin (B), and the continuous fibers in the fiber-reinforced EVOH sheet or tape of the present invention is preferably 70 mass% or more, more preferably 80 mass% or more, even more preferably 90 mass% or more, and may be 95 mass% or more, 98 mass% or more, 99 mass% or more, or 100 mass%.

Method of Producing Fiber-Reinforced EVOH Sheet or Tape

The fiber-reinforced EVOH sheet or tape of the present invention can be produced in accordance with a known method for producing a so-called UD sheet or tape (e.g., a mode in which polyamide is replaced with an EVOH and the conditions are adjusted in the method described in JP 2015-30119 A), and for example, can be produced by overlaying the EVOH (A) (and a resin composition containing the acid modified polyolefin (B) and the additional components, as needed) on the continuous fibers, followed by heat processing to impregnate the continuous fibers with the EVOH (A) (and the resin composition containing the acid modified polyolefin (B) and the additional components, as needed). In order to satisfy the specific degree of orientation, the production method preferably includes the step of adjusting the degree of orientation by uniformly trickling the melt EVOH (A) (and the resin composition containing the acid modified polyolefin (B) and the additional components, as needed) on continuous fibers taken up at a fixed rate for heat pressing, and the like.

If the resin to be impregnated into the continuous fibers is the resin composition containing components other than the EVOH (A), the method of producing such a resin composition is not particularly limited, and for example, the production can be carried out by mixing or kneading the EVOH (A), the acid modified polyolefin (B), and additional components, as needed, under melting conditions. The mixing or kneading under melting conditions may be performed using a known mixing device or kneading device, such as a kneader-ruder, an extruder, mixing rolls, and a Banbury mixer, for example. The temperature for mixing or kneading may be appropriately adjusted in accordance with the melting point of the EVOH (A) to be used and the like, and a temperature in the temperature range of 160°C or more and 300°C or less may be usually employed. It is also possible to cause the resin composition to contain the additional components by immersing the EVOH (A) in an aqueous solution dissolving the additional components and the like.

A molded article comprising the fiber-reinforced EVOH sheet or tape of the present invention is another embodiment of the present invention. Such a molded article may be a known molded article, and is preferably a pressure vessel and particularly preferably a hydrogen tank.

The hydrogen tank can be produced by winding or laminating the fiber-reinforced EVOH sheet or tape on a mandrel by winding molding or braiding molding. In addition, the production method preferably comprises the step of further laminating a fiber-reinforced thermoplastic resin sheet or tape different from the EVOH outside the molded article obtained by winding or laminating the fiber-reinforced EVOH sheet or tape. Examples of the thermoplastic resin different from the EVOH include, but not particularly limited to, polyamides and the like.

The winding molding and the braiding molding are known molding methods in which a fiber-reinforcing material (material in the form of filaments, roving, tape) impregnated with a matrix resin is wound on a rotating mandrel to provide a predetermined thickness, followed by curing and demolding. The molding method is not limited to above, and it is also possible to use other known methods, such as insert molding, sandwich molding, stamping molding, press forming, and automatic lamination, for example.

Fiber-Reinforced EVOH Plate

The fiber-reinforced EVOH plate of the present invention can be produced by, but not limited to: a method comprising heat molding a fabric using the fiber-reinforced EVOH sheet or tape of the present invention as the warp or weft or both; a method comprising heat molding the fiber-reinforced EVOH sheet or tape of the present invention by placing in parallel; a method comprising laminating the fiber-reinforced EVOH sheets or tapes of the present invention, each alternately at 90° to the direction of the continuous fibers and then heat molding; and the like, for example.

A molded article comprising the fiber-reinforced EVOH plate of the present invention is another embodiment of the present invention. Such a molded article can be produced by, but not limited to, a method comprising preheating the fiber-reinforced EVOH plate of the present invention with an IR heater or the like, followed by pressing with a press; and the like, for example. The molded article of the present invention is preferably a hydrogen tank.

The fiber-reinforced EVOH sheet, tape, plate, and molded article of the present invention are preferably used for applications expected to have gas barrier properties and mechanical strength. Examples of such an application include compressed natural gas tanks, liquefied propane gas tanks, hydrogen tanks, and the like. Additional examples include pipes and tubes for transport of natural gas and hydrogen gas, and the like. The fiber-reinforced EVOH sheet, tape, plate, and molded article of the present invention are used for applications not limited to those exemplified here.

A preferred embodiment as the molded article of the present invention includes a molded article comprising: the fiber-reinforced EVOH sheet or tape of the present invention; and a fiber-reinforced sheet or tape containing a resin reactive to the EVOH. The molded article containing the fiber-reinforced EVOH sheet or tape and the fiber-reinforced sheet or tape containing the resin reactive to the EVOH allows reaction and integration by heating to the melting temperature or higher after lamination, and thus providing both hydrogen barrier properties and environmental resistance. The fiber-reinforced EVOH sheet or tape and the fiber-reinforced sheet or tape containing the resin reactive to the EVOH are preferably laminated in direct contact with each other from the perspective of the reactivity of both, and from the perspective of protecting the EVOH from the external environment, the molded article preferably has the fiber-reinforced EVOH sheet or tape inside and the fiber-reinforced sheet or tape containing the resin reactive to the EVOH outside.

Examples of the resin reactive to the EVOH include polyamide-based resins, polyurethane resins, acid modified polyolefin resins, and the like, and among them, polyamide-based resins are preferred from the perspective of high environmental resistance.

Such a polyamide-based resin refers to a polymer obtained by polymerizing a monomer by amide bond. Specific examples of the polyamide-based resin include: polycaproamide (nylon 6), poly-w-aminoheptanoic acid (nylon 7), poly-w-aminononanoic acid (nylon 9), polyundecaneamide (nylon 11), polylauryllactam (nylon 12), polyethylenediamine adipamide (nylon 26), polytetramethylene adipamide (nylon 46), polyhexamethylene adipamide (nylon 66), polyhexamethylene sebacamide (nylon 610), polyhexamethylene dodecanamide (nylon 612), polyoctamethylene adipamide (nylon 86), polydecamethylene adipamide (nylon 106), caprolactam/lauryllactam copolymers (nylon 6/12), caprolactam/w-aminononanoic acid copolymers (nylon 6/9), caprolactam/hexamethylenediammonium adipate copolymers (nylon 6/66), lauryllactam/hexamethylenediammonium adipate copolymers (nylon 12/66), ethylenediammonium adipate/hexamethylenediammonium adipate copolymers (nylon 26/66), caprolactam/hexamethylenediammonium adipate/hexamethylenediammonium sebacate copolymers (nylon 6/66/610), ethylenediammonium adipate/hexamethylenediammonium adipate/hexamethylenediammonium sebacate copolymers (nylon 26/66/610), polyhexamethylene isophthalamide (nylon 6I), polyhexamethylene terephthalamide (nylon 6T), hexamethylene isophthalamide/hexamethylene terephthalamide copolymers (nylon 6I/6T), 11-aminoundecaneamide/hexamethylene terephthalamide copolymers, polynonamethylene terephthalamide (nylon 9T), polydecamethylene terephthalamide (nylon 10T), polyhexamethylene cyclohexylamide, and polynonamethylene cyclohexylamide; these polyamides modified with an aromatic amine, such as methylenebenzilamine and metaxylenediamine; metaxylylenediammonium adipate; and the like. Among them, from the perspective of environmental resistance, the polyamide-based resin is preferably at least one selected from the group consisting of nylon 11, nylon 6T, nylon 9T, and nylon 10T, and is more preferably nylon 9T.

The fiber-reinforced sheet or tape of the resin reactive to the EVOH can be produced by the same method as the method of producing the fiber-reinforced EVOH sheet or tape described above. In addition, the molded article containing the fiber-reinforced sheet or tape of the resin reactive to the EVOH can be produced by the same method as the method of producing the molded article containing the fiber-reinforced EVOH sheet or tape described above.

Examples

The present invention is even more specifically described below with reference to Examples and the like although the present invention is not limited at all by these Examples. It should be noted that examples mainly using the fiber-reinforced EVOH sheet are described in Example and the like below while the tape with a width of less than 250 mm exhibits the same effects.

Evaluation Methods

(1) Degree of Orientation

Each fiber-reinforced EVOH sheet obtained in Examples and Comparative Examples was subjected to measurement under conditions of the size of the field of view of 2.0 mm (cp) $\times$ 2.0 mm (h), a tube voltage of 23 kV, and a tube current of 100 pA using a three-dimensional X ray microscopic CT scanner (manufactured by Yamato Scientific Co., Ltd.) to obtain a three-dimensional image. The continuous fibers in the three-dimensional image were thinned using three-dimensional volume rendering software (VG-Studio MAX produced by Volume Graphics GmbH) to calculate degrees of orientation ((F)/(S)) for all (p) and (q) and obtain a number average of the degrees.

(2) Oxygen Transmission Rate (OTR)

Each fiber-reinforced EVOH sheet obtained in Examples and Comparative Examples was subjected to humidity control under conditions of 20°C/65% RH, followed by OTR measurement under conditions of 20°C/65% RH using an oxygen transmission rate analyzer (OX-Tran 2/20 manufactured by Modern Control Inc.). As a method of converting the OTR thus obtained to thickness, calculation was performed by OTR/thickness ($\mu$m)$\times$20 (cc•20 $\mu$m/(m$^2$•day•atm)).

(3) Hydrogen Transmission Rate (H$_2$TR)

Each fiber-reinforced EVOH sheet obtained in Examples and Comparative Examples was subjected to humidity control under conditions of 20°C/0% RH, followed by H$_2$TR measurement in accordance with ISO 15105-1 (GC method) under conditions of 20°C/0% RH using GTR-21 manufactured by GTR TEC Corp. As a method of converting the H$_2$TR thus obtained to thickness, calculation was performed by H$_2$TR/thickness ($\mu$m)$\times$20 (cc•20 $\mu$m/(m$^2$•day•atm)).

(4) Fiber Content

Approximately 350 mg of each fiber-reinforced EVOH plate obtained in Examples and Comparative Examples was sampled for weight measurement and the weight was defined as M1. Subsequently, 15 mL of HFIP (1,1,1,3,3,3-hexafluoro-2-propanol) was added and left standing at room temperature for 1 day to dissolve the EVOH, and thus continuous fibers were obtained. Filtration was then performed, and the continuous fibers thus obtained were vacuum dried at room temperature, followed by weight measurement and the weight was defined as M2. The fiber content was then obtained from the following equation.

$$\text{Fiber Content} = (M2/M1)\times100 \ (\%)$$

(5) Flexural Strength

Each fiber-reinforced ethylene-vinyl alcohol copolymer plate obtained in Examples and Comparative Examples was subjected to measurement in accordance with ISO 14125 in the atmosphere at 23°C and 50% RH. In the case of the flexural strength of 1400 MPa or less, the strength was determined as insufficient.

Materials Used

- EVOH 1: "EVAL® L171B" (EVOH, produced by Kuraray Co., Ltd., ethylene unit content of 27 mol%, degree of saponification of 99.9 mol%, 4.0 g/10 min MFR (210°C, under a load of 2160 g))
- EVOH 2: "EVAL® F101B" (EVOH, produced by Kuraray Co., Ltd., ethylene unit content of 32 mol%, degree of saponification of 99.9 mol%, 3.8 g/10 min MFR (210°C, under a load of 2160 g))
- Acid Modified PO 1: "TAFMER™ MH7020" (maleic anhydride modified ethylene-1-butene copolymer, produced by Mitsui Chemicals, Inc.)
- PA 6: "AMILAN™ CM3001N" (nylon 6, produced by Toray Industries, Inc., melting point of 265°C)
- Carbon Fiber 1: T700S (carbon fiber, produced by Toray Industries, Inc., density of 1.8, diameter of 7 $\mu$m, the number of filaments of 12000)

Example 1

Carbon Fiber 1 spread to a width of 30 cm by opening at 120°C was taken up at 2 m/min and EVOH 1 melted at 220°C was uniformly trickled over the continuous fibers to have a mass ratio between EVOH 1 and the continuous fibers of approximately 1:1. This was sandwiched by polyimide films and pressed under conditions of 220°C and 2 MPa with a roll press, followed by cooling to obtain a fiber-reinforced EVOH sheet with a width of 30 cm and a thickness of 0.21 mm. The fiber-reinforced EVOH sheet thus obtained was subjected to measurement of the degree of orientation, the OTR, and the $H_2$TR in accordance with the methods described in the above evaluation methods (1) through (3). The results are shown in Table 1.

12 sheets of the fiber-reinforced EVOH sheet thus obtained were laminated to provide the direction of the fibers at 0°, 90°, 0°, 90°, 0°, 90°, 90°, 0°, 90°, 0°, 90°, and 0° and were set in a mold of 12 cm square. The mold was set in a vacuum press and the mold temperature was raised from 30°C to 220°C for 40 min while vacuuming. The temperature was held at 220°C for 30 min and then vacuuming was stopped, and the temperature was cooled down to 30°C for 15 min while applying a pressure of 5 MPa to obtain a fiber-reinforced EVOH plate with a thickness of approximately 2 mm. The fiber-reinforced EVOH plate thus obtained was subjected to measurement of the fiber content and the flexural strength in accordance with the methods described in the above evaluation methods (4) and (5). The results are shown in Table 1.

Example 2

Resin composition pellets were obtained by dry blending 90 parts by mass of EVOH 1, 10 parts by mass of Acid Modified PO 1, 0.25 parts by mass of an antioxidant (pentaerythritol tetrakis[3-(3,5-di-tert-butyl-4-hydroxyphenyl)propionate] ("IRGANOX 1010" produced by BASF SE)), and 0.25 parts by mass of N,N'-hexane-1,6-diyl bis[3-(3,5-di-tert-butyl-4-hydroxyphenyl)propionamide] ("IRGANOX 1098" produced by BASF SE), extruding the blended material under conditions of 220°C, the number of screw rotations of 200 rpm, and the amount of resin to be extruded of 25 kg/hour using a 30 mm$\varphi$ twin-screw extruder ("TEX-30SS-30CRW-2V" manufactured by Japan Steel Works, Ltd.) for pelletization, and then drying at 30°C for 16 hours under reduced pressure. A fiber-reinforced EVOH sheet and a fiber-reinforced EVOH plate were produced in the same manner as that in Example 1 except for using the resin composition pellets thus obtained instead of EVOH 1 for evaluation. The results are shown in Table 1.

Example 3

A fiber-reinforced EVOH sheet and a fiber-reinforced EVOH plate were produced in the same manner as that in Example 1 except for using EVOH 2 instead of EVOH 1 for evaluation. The results are shown in Table 1.

Comparative Example 1

Carbon fibers were placed in a single direction on an EVOH 2 film with a thickness of 100 $\mu$m, and another EVOH 2 film with a thickness of 100 $\mu$m was overlaid thereon. The mass ratio between the films and the carbon fibers was approximately 1:1. They were pressed under conditions of 220°C and 2 MPa with a press to obtain a fiber-reinforced EVOH sheet with a thickness of 0.78 mm. The fiber-reinforced EVOH sheet thus obtained was subjected to measurement of the degree of orientation, the OTR, and the $H_2$TR in accordance with the methods described in the above evaluation methods (1) through (3). The results are shown in Table 1.

6 sheets of the fiber-reinforced EVOH sheet thus obtained were laminated to provide the direction of the fibers at 0°, 90°, 0°, 0°, 90°, and 0° and were set in a mold of 12 cm square. The mold was set in a vacuum press and the mold temperature was raised from 30°C to 220°C for 40 min while vacuuming. The temperature was held at 220°C for 30 min and then vacuuming was stopped, and the temperature was cooled down to 30°C for 15 min while applying a pressure of 5 MPa to obtain a fiber-reinforced EVOH plate with a thickness of approximately 2 mm. The fiber-reinforced EVOH plate thus obtained was subjected to measurement of the fiber content and the flexural strength in accordance with the methods described in the above evaluation methods (4) and (5). The results are shown in Table 1.

Comparative Example 2

A fiber-reinforced sheet and a fiber-reinforced plate were produced in the same manner as that in Example 1 except for using PA 6 instead of EVOH 1 and changing the temperature settings of 220°C to 280°C for evaluation. The results are shown in Table 1.

[Table 1]

| | | | | Example 1 | Example 2 | Example 3 | Comparative Example 1 | Comparative Example 2 |
|---|---|---|---|---|---|---|---|---|
| Fiber-Reinforced EVOH Sheet | EVOH (A) | Type | - | EVOH 1 | EVOH 1 | EVOH 2 | EVOH 2 | PA 6 |
| | | Ethylene Unit Content | mol% | 27 | 27 | 32 | 32 | - |
| | | Content | parts by mass | 100 | 90 | 100 | 100 | 100 |
| | Acid Modified PO (B) | Type | - | - | Acid Modified PO 1 | - | - | - |
| | | Content | parts by mass | - | 10 | - | - | - |
| | Continuous Fiber | Type | - | Carbon Fiber 1 | Carbon Fiber 1 | Carbon Fiber 1 | Carbon Fiber 1 | Carbon Fiber 1 |
| Fiber-Reinforced EVOH Sheet | | Degree of Orientation | | 1.4 | 1.3 | 1.6 | 2.4 | 1.4 |
| | | OTR | *1 | 0.2 | 0.2 | 0.3 | 0.7 | 86 |
| | | $H_2TR$ | *1 | 50 | 70 | 100 | 180 | 7500 |
| Fiber-Reinforced EVOH Plate | | Fiber Content | mass% | 48 | 50 | 47 | 45 | 52 |
| | | Flexural Strength | MPa | 1750 | 1610 | 1640 | 1350 | 678 |
| *1 cc•20 $\mu$m/(m$^2$•day•atm) | | | | | | | | |

**Claims**

1. A fiber-reinforced ethylene-vinyl alcohol copolymer sheet or tape, comprising an ethylene-vinyl alcohol copolymer (A) and continuous fibers,
   wherein
   the continuous fibers are oriented in an MD direction to have a degree of orientation of 2 or less on average obtained by the following equation (1):

$$\text{Degree of Orientation} = (F)/(S) \quad (1)$$

   (In the equation (1), in a square region obtained by cutting the fiber-reinforced ethylene-vinyl alcohol copolymer sheet or tape to 2 mm in a TD direction and 2 mm in the MD direction, given that an intersection point (p) denotes an arbitrary intersection point of one of two sides in the TD direction with one of the continuous fibers and an intersection point (q) denotes an arbitrary intersection point of the other side in the TD direction with one of the continuous fibers that is reachable only along the continuous fibers from (p), (F) is a path length of a shortest path among paths to reach (q) only along the continuous fibers from (p) and (S) is a linear distance between (p) and (q). It should be noted that, as long as the continuous fibers cross each other when the square region is observed from a thickness direction in the fiber-reinforced ethylene-vinyl alcohol copolymer sheet or tape, these continuous fibers are considered to constitute a continuous path even in the case that the continuous fibers are actually separated from each other in the thickness direction and do not contact each other.)

2. The fiber-reinforced ethylene-vinyl alcohol copolymer sheet or tape according to Claim 1, wherein the continuous fibers are at least one selected from the group consisting of carbon fibers, glass fibers, aramid fibers, wholly aromatic polyester fibers, ceramic fibers, and metal fibers.

3. The fiber-reinforced ethylene-vinyl alcohol copolymer sheet or tape according to Claim 1, wherein the ethylene-vinyl alcohol copolymer (A) has an ethylene unit content of 15 mol% or more and 50 mol% or less.

4. The fiber-reinforced ethylene-vinyl alcohol copolymer sheet or tape according to Claim 1, wherein the sheet or tape has a content of the ethylene-vinyl alcohol copolymer (A) of 20 mass% or more and 80 mass% or less and a content of the continuous fibers of 20 mass% or more and 80 mass% or less.

5. The fiber-reinforced ethylene-vinyl alcohol copolymer sheet or tape according to Claim 1, further comprising acid modified polyolefin (B).

6. A molded article, comprising the fiber-reinforced ethylene-vinyl alcohol copolymer sheet or tape according to any one of Claims 1 through 5.

7. The molded article according to Claim 6, wherein the molded article is a pressure vessel.

8. The molded article according to Claim 7, wherein the molded article is a hydrogen tank.

9. A method of producing the molded article according to Claim 8, comprising:
winding or laminating the fiber-reinforced ethylene-vinyl alcohol copolymer sheet or tape on a mandrel by winding molding or braiding molding.

10. The production method according to Claim 9, comprising:
winding or laminating a fiber-reinforced thermoplastic resin sheet or tape different from the ethylene-vinyl alcohol copolymer outside the molded article containing the fiber-reinforced ethylene-vinyl alcohol copolymer sheet or tape.

11. A fiber-reinforced ethylene-vinyl alcohol copolymer plate, comprising the fiber-reinforced ethylene-vinyl alcohol copolymer sheet or tape according to any one of Claims 1 through 5.

12. A molded article, comprising the fiber-reinforced ethylene-vinyl alcohol copolymer plate according to Claim 11.

13. The molded article according to Claim 12, wherein the molded article is a hydrogen tank.

14. A molded article, comprising: the fiber-reinforced ethylene-vinyl alcohol copolymer sheet or tape according to any one of Claims 1 through 5; and a fiber-reinforced sheet or tape containing a resin reactive to the ethylene-vinyl alcohol copolymer.

15. The molded article according to Claim 14, wherein the resin reactive to the ethylene-vinyl alcohol copolymer is a polyamide-based resin.

[FIG. 1]

## INTERNATIONAL SEARCH REPORT

| | International application No. |
|---|---|
| | **PCT/JP2024/001990** |

**A.    CLASSIFICATION OF SUBJECT MATTER**

*C08J 5/04*(2006.01)i; *B29C 70/16*(2006.01)i; *B29C 70/32*(2006.01)i; *F17C 1/06*(2006.01)i
FI:    C08J5/04 CER; B29C70/16; B29C70/32; F17C1/06

According to International Patent Classification (IPC) or to both national classification and IPC

**B.    FIELDS SEARCHED**

Minimum documentation searched (classification system followed by classification symbols)

C08J5/04; B29C70/16; B29C70/32; F17C1/06

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | US 2006/0144504 A1 (EDWARDS, Christopher M) 06 July 2006 (2006-07-06) claims, paragraphs [0003], [0021]-[0026], [0034], examples | 1-2, 4, 6, 11-12 |
| Y | | 3, 5 |
| X | JP 2009-505035 A (BASF SE) 05 February 2009 (2009-02-05) claims, paragraphs [0007]-[0020], examples | 1-2, 4, 6-7, 9 |
| Y | | 3, 5, 7-8, 10, 13-15 |
| Y | JP 2020-151977 A (KURARAY CO., LTD.) 24 September 2020 (2020-09-24) claims, examples | 3, 5 |
| Y | JP 2019-502067 A (DSM IP ASSETS B.V.) 24 January 2019 (2019-01-24) claims, paragraphs [0031]-[0032], examples | 7-8, 13 |
| Y | JP 2004-176898 A (TORAY INDUSTRIES, INC.) 24 June 2004 (2004-06-24) claims, paragraphs [0001], [0010]-[0017], examples | 10, 14-15 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **19 March 2024** | **09 April 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/001990**

| Patent document cited in search report | | | Publication date (day/month/year) | Patent family member(s) | Publication date (day/month/year) |
|---|---|---|---|---|---|
| US | 2006/0144504 | A1 | 06 July 2006 | (Family: none) | |
| JP | 2009-505035 | A | 05 February 2009 | US 2010/0140273 A1 claims, paragraphs [0010]-[0025], examples | |
| JP | 2020-151977 | A | 24 September 2020 | (Family: none) | |
| JP | 2019-502067 | A | 24 January 2019 | US 2018/0363849 A1 claims, paragraphs [0041]-[0042], examples | |
| JP | 2004-176898 | A | 24 June 2004 | (Family: none) | |

Form PCT/ISA/210 (patent family annex) (July 2022)

**EP 4 656 673 A1**

**Patent documents cited in the description**

- WO 2015046290 A
- JP 2015027813 A
- JP 2015030119 A